# EUROPEAN PATENT SPECIFICATION

(11) **EP 1 774 847 B1**
(45) Date of publication and mention of the grant of the patent: **07.05.2008**
(21) Application number: 06076866.0
(22) Date of filing: 11.10.2006
(51) Int. Cl.: A01G 9/22

(54) **Screening device and screen frame for a glasshouse, a glasshouse and a method for manufacturing such a glasshouse**
Abschirmvorrichtung und Abschirmrahmen für ein Gewächshaus, Gewächshaus und Verfahren für die Anfertigung eines solchen Gewächshaus
Écran et cadre d'écran pour une serre, serre et procédé pour fabriquer une telle serre

(30) Priority: 11.10.2005 NL 1030165; 21.12.2005 NL 1030731
(43) Date of publication of application: 18.04.2007
(73) Proprietor: Bordeso B.V., 3833 KJ Leusden (NL)
(72) Inventor: Bom, Petrus Leonardus Jozef, 2970 's Gravenwezel (BE)
(74) Representative: de Baat, Michiel Anton

(56) References cited:
- NL-A- 9 400 921
- NL-C2- 1 023 853
- NL-C2- 1 027 097

## Description

The invention relates to a screening device for a glasshouse according to claim 1, comprising a screen frame, a fabric screen, guides, a coupling means and a flexible element such as a closing strip. The invention also relates to a screen frame according to claim 21, which has a profile which is C-shaped in cross-section. The invention also relates to a glasshouse according to claim 30, in which a screening device according to the invention is arranged, and to a method according to claim 39 for forming a glasshouse with a screening device.

The use of screening devices in a glasshouse is generally known. A screening device is known from various publications which for instance has a screen frame having an extruded aluminium profile. The screen frame is opened and closed by means of a drive member. The screen is moved into its place in the roof of the glasshouse by moving the screen frame. The screen is connected to the screen frame and to the frame of the glasshouse. In the opened situation the screen closes off the inner part of the glasshouse from the part which is situated thereabove and which is for instance in contact with air openings, such as windows, in the glasshouse.

An example of a screen frame according to the prior art is shown in NL 1 014 244.

A problem in the known prior art screening device and screen frame is the high cost of transporting the screen frames to the site. The object of the invention is to provide a screen frame, screening device and glasshouse, wherein the costs of the manufacturing method are reduced. A further object is to reduce the cost of such a screen frame/screening device/glasshouse. According to yet another aspect, a screen frame is provided which can be longer, i.e. which can extend over a greater length in the width of the glasshouse, than in the prior art.

At least one of these objectives is achieved in that the screening device according to the invention has the features of claim 1.

The screen frame is preferably connected to the guide by means of a releasable coupling means. The flexible element, such as the closing strip, is also connected releasably to the screen frame. Because releasable elements are used in each case, it is possible for the screen frame to have a rolled profile. It is hereby possible for the screen frame to be manufactured on-site at the location where the glasshouse is manufactured. The transportation costs can hereby be reduced considerably.

The screen frame has a rolled profile of substantially C-shaped cross-section. The inner side of the C-shape can be used to accommodate the fabric screen when the screening device is closed, while the outer side of the C-shape forms, among others, the front side of the screen frame from which the flexible element, such as the closing strip, protrudes such that the closing strip can run up against a fixed member in the roof of the glasshouse when the screening device is opened. It is noted that a U-shape or L-shape can also be seen substantially as a C-shape. A plurality of rolled edges can also be arranged in the substantially C-shape of the profile. Overall the screen frame will have a C-shape.

The rolled screen frame preferably has at least one rolled edge close to the centre of the profile of the screen frame. An edge is hereby created which can be engaged as point of engagement for one of the releasable, in particular clampable, separate components such as coupling means or clamping means for the fabric screen.

The screen frame preferably has a length which extends over multiple fixed member widths, preferably more than four metres and, according to a preferred embodiment, more than six metres and more than eight metres.

It is noted that applicant has understood that use of the releasable flexible element and the coupling element can result in the application of the rolled profile. Because the rolled profile is applied, forming of the screen frame can take place on site. The material for rolling, for instance a steel strip, is brought to the site and the steel strip is rolled on site to a screen frame of the desired dimensions, preferably dimensions extending over the whole screen length of the glasshouse. It is hereby possible to operate with fewer drive members. A rolled material such as steel further has a higher rigidity than aluminium extrusion profiles, whereby it is possible to work with less material. The shading effect of the screen frame is hereby reduced.

According to another aspect of the invention, an improved screening device for a glasshouse is obtained in that the screen frame has a rolled profile, wherein a flexible element such as a closing strip is connected to the screen frame in that the screen frame is rolled round an end of the closing strip. The strip preferably has on one outer end a thickened portion around which the screen frame can be arranged by rolling. This end is enclosed in a receiving chamber which is rolled into the screen frame profile. Rolling of the screen frame preferably takes place on site and the screen frame can be simultaneously fastened to the fabric screen. This connection is preferably releasable in that the strip can be pushed out of the receiving chamber.

The screen frame is preferably provided with a folded edge formed on at least one of the longitudinal edges of the profile. A flange is hereby formed on an outer end of the profile. The folded edge is formed during the rolling by folding the material around a bending point. This bending point or this folded edge can be used as mounting position or point of engagement of one of the releasable components. The coupling means is particularly arranged at least partially around the folded edge, and in particular around the outer end of the folded edge. The outer end of the screen frame is formed, using this folded edge in combination with the bending point, into a point of engagement which can be readily engaged by one or other releasable component.

A stop according to the invention is a relatively narrow strip close to the longitudinal edge.

In a particular embodiment both longitudinal edges of the screen frame are provided with a folded edge which is formed by bending this outer end. The screen frame is hereby provided with at least two points of engagement which can be readily engaged by the releasable components. The coupling means engages in particular on the first end and the folded edge associated therewith, and a second coupling means engages on the second folded edge close to the second end. A releasable element can also be arranged between the folded edges. The folded edges can be used in each case as an eye in which a coupling element can be clamped close to at least one end.

At least one folded edge is preferably folded inward, i.e. toward the inner side of the substantial C-shape of the screen frame.

According to a further embodiment, the profile of the screen frame has in cross-section two folded edges close to the outer end, and the profile further has at least two bends. Bends are formed by rolling. The substantially C-shaped cross-section of the profile can be achieved with the two bends. The screen frame hereby also acquires an inner and an outer side, wherein the inner side is used as storage space for the fabric screen. And in addition, at least one of the two bends, optionally together with one of the two folded edges, can be used as eye for a coupling means arranged on the screen frame for the purpose of coupling for instance the fabric screen to the screen frame.

In a preferred embodiment the profile of the screen frame has in cross-section at least one double V-shaped bend. This is for instance a Z-shaped bend. This means that two bending points are arranged at relatively short distance from each other in lengthwise direction of the rolled material, wherein the distance between the bending points is relatively small compared to the length of the side on either side of these bending points. Through forming of the double V-shaped bend, in particular the Z-shaped bend, a point of engagement on which one of the releasable elements of the screen frame can engage is rolled into the screen frame.

According to a further preferred embodiment the screening device has a screen frame with a profile which has two bends which are Z-shaped in cross-section. A screen frame is hereby formed which has at least two points of engagement for the diverse coupling means engaging on the screen frame.

According to a further recommended embodiment, the profile has substantially two dovetail shapes in cross-section. The dovetail shapes are particularly suitable for arranging a clamping releasable element which can be arranged around the dovetail shape or can be placed in the dovetail shape.

It is further favourable that the coupling means clamps the flexible element onto the screen frame. The coupling means thus has a dual function, i.e. coupling to the guide and clamping means for the flexible element on the screen frame.

It is further favourable that the flexible element lies against at least one side of the profile of the screen frame. This is in particular the side of a dovetail shape in the cross-sectional profile between the two bending points of this dovetail figure. Through the flexible element lying against a side of the profile of the screen frame a large contact surface is formed, whereby the flexible element can protrude from the screen frame.

It is further favourable when the flexible element lies against the folded edge of the screen frame and against at least one side of the profile adjacent to the folded edge. The flexible element will hereby engage around the bend arranged between the folded edge and the adjacent side of the screen frame profile. When the bend is arranged in an upper part of the screen frame in the situation of use, the force of gravity will hold the flexible element suspended in place on the screen frame. In particular the thus arranged flexible element is clamped on the screen frame by the coupling means. The coupling means also engages along the outside on the bend of the folded edge, and engages around the folded edge and the outer end of the screen frame.

The profile preferably has at least two bends so that a dovetail figure is formed, and the flexible element engages on this dovetail shape.

In a preferred embodiment the flexible element is arranged on an outer side of the screen frame profile and on the outer side of this dovetail figure. A better coupling is possible due to the dovetail figure.

The outer end of the folded edge is preferably used as engaging means of the coupling means. A point of engagement is created for the coupling means in that a bend is arranged in the profile relatively close to the longitudinal edge of the screen frame.

The coupling means preferably couples the screen frame to a guide extending above the fabric screens. The screen frame can hereby be suspended from the guide.

According to a further preferred embodiment, the screening device further comprises a releasable clamping means which can be clamped on the screen frame and which connects the fabric screen to the screen frame. A releasable connection of the fabric screen to the screen frame is hereby possible. The clamping means can be arranged between two bends in the screen frame profile, in particular a bend which is arranged close to the outer end of the profile and with which the folded edge of the longitudinal edge of the profile is formed. In a particular embodiment the clamping means is arranged in a dovetail shape formed in the cross-section of the profile of the screen frame.

In a particular embodiment the clamping means is clamped between an inner wall of the profile and the folded edge. The fabric screen is hereby arranged on an inner side of the screen frame, in particular the inner side of the C-shaped profile.

The coupling means is preferably a wire spring. In another embodiment, or in the same embodiment, the clamping means is a wire spring. A wire spring can be assembled easily and the cost thereof is low.

In a preferred embodiment the coupling means is the same wire spring as the wire spring for the clamping means. By fastening this one wire spring to the screen frame, for instance by clamping or other connecting technique, both the guiding for the screen frame and fastening of the screen to the screen frame can be realized in one step. This results in a time-saving in placing of the screen frames in the greenhouse. The wire spring with the dual function is arranged clampingly on the inner side of the C-shaped profile of the screen frame. The wire spring protrudes from the inner side of the C-shaped profile with components which form the guiding means for coupling to the mounting of the screening device in the glasshouse.

The invention further relates to a screen frame for a screening device for a glasshouse which has a rolled profile, wherein the screen frame is provided with a folded edge formed on at least one of the longitudinal edges of the profile. The profile preferably further has a C-shaped cross-section. Such a screen frame can be formed on site, at the location where the glasshouse is constructed, and placed in the glasshouse as part of the screening device. Transport costs are hereby reduced considerably.

Further preferred embodiments of the screen frame are stated in the claims, and the advantages hereof are indicated in the rest of this description. It is noted that the various preferred embodiments, and each individual measure of the screen frame and/or the screening device can per se form the basis for a divisional application, even if a specific advantage of this measure is not stated in this description.

The invention further relates to a glasshouse comprising a glasshouse frame of columns, fixed members and gutters. In the glasshouse a screening device is preferably arranged between the fixed members. The screening device comprises a screen frame, wherein an end of a fabric screen is connected to this screen frame. The fabric screen is connected with the other end to the glasshouse frame or to another suitable component connected to the glasshouse. The screen frame is movable between a closing position and an opened position of the fabric screens by means of a drive member. Guides are optionally arranged for guiding the movement between the opened position and the closing position. According to the invention the screen frame has a rolled profile which preferably has a C-shaped cross-section. A profile is hereby obtained which can be rolled at the location of the glasshouse, whereby the cost of transporting the screen frames to the site is reduced considerably. In addition, the screen frame extends over multiple fixed member widths.

Further preferred embodiments of the glasshouse are stated in the sub-claims and in the rest of this description.

The invention further relates to a method for manufacturing a screening device in a glasshouse. A guide is provided in the glasshouse. According to the invention a stock of rollable material is provided on site, the rollable material is rolled on site into a screen frame, wherein a screen frame with a C-shaped cross-section is rolled. In a further preferred embodiment at least one folded edge is rolled on one of the longitudinal edges of the material. According to the invention the screen frame is placed in the screening device and the screen frame is coupled to the guide. The screen frame is hereby formed for the screening device in advantageous manner by rolling this screen frame at the location of the site. The cost of transporting the screen frame is reduced considerably.

The method according to the invention provides for the making of a simple screen frame profile shape.

According to a further embodiment of the method, the screen frame profile is rolled on site and a flexible element such as a closing strip is herein connected to the profile during rolling. During on-site rolling a receiving chamber is formed in the C-shaped profile, in which chamber an outer end of the closing strip is received. A connection is hereby possible in simple manner between the closing strip and the rolled profile.

Further preferred embodiments of the method are stated in the claims, and the advantages of these preferred embodiments and other measures according to the method of the invention will be given in the description and the accompanying drawings.

The various measures according to the claims and the measures stated in the description can each individually form the basis of a divisional application. Measures for which no advantage is stated in this description can also serve as basis for a divisional application.

The invention will be further described with reference to the accompanying drawings, in which:
- Figure 1: is a perspective view of a schematically shown glasshouse,
- Figure 2: shows a cross-section of a screen frame according to a first embodiment,
- Figure 3 and 4: show two perspective views of a screen frame according to the first embodiment,
- Figure 5: shows a cross-sectional view of a screening device according to a first embodiment,
- Figure 6: shows a cross-section of a second embodiment of the screen frame,

- Figure 7: shows a perspective view of a third embodiment of the screening device according to the invention,
- Figure 8: shows a view of a fourth embodiment of the screening device according to the invention,
- Figure 9: shows a schematic view of rolling of the screen frame according to a fifth embodiment,
- Figure 10: shows a detail view of the wire spring according to a sixth embodiment of the invention.

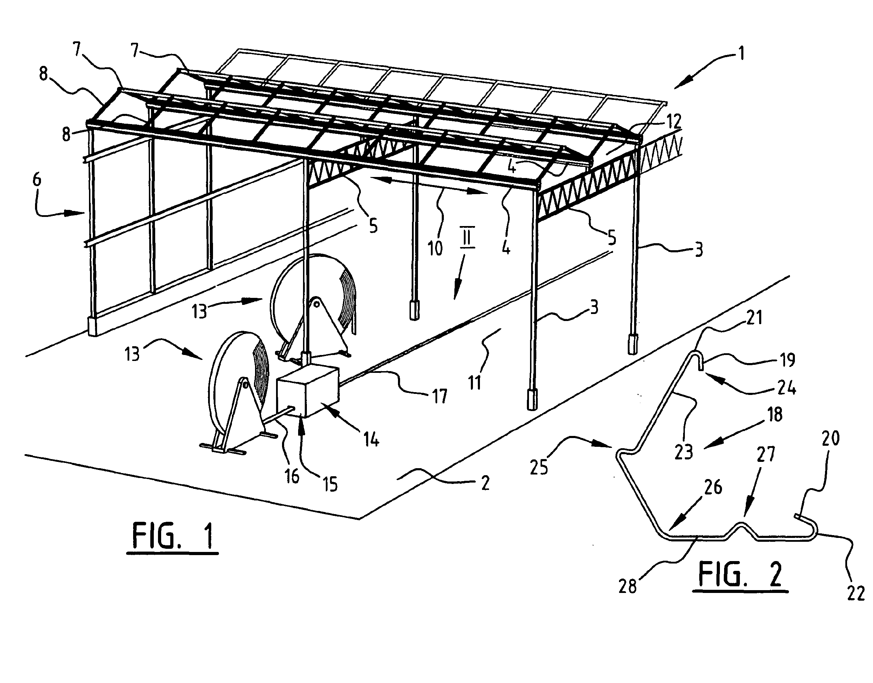

Figure 1 shows a glasshouse 1 which is constructed schematically. Arranged on a floor 2 are rows of stanchions 3 on which a roof part of the glasshouse is placed. The rows of stanchions support a gutter 4, and the rows are mutually connected by means of fixed members 5. The glasshouse has a side 6 where the gutters terminate. Fixed members and stanchions form the glasshouse frame.

The shown glasshouse 1 is provided with a number of ridges 7 which are arranged between gutters 4 parallel to the gutters in longitudinal direction. The ridges and the gutters are mutually connected by trusses 8. Two trusses 8, a part of ridge 7 and a part of gutter 4 form a rectangular part in which a plate-like element such as a pane can be placed. In another embodiment another type of roof element is applied, for instance plastic roof elements.

The construction of the glasshouse frame, in this embodiment formed by stanchions 3, gutters 4 and fixed members 5, is not important for the invention. Diverse other embodiments can be applied in combination with the invention according to this application.

Screening devices are placed between fixed members 5. The screening device is not shown in figure 1. The screening device is movable between fixed members 5, as indicated with arrow 10. The space between fixed members 5 can be closed as according to arrow 10 by means of the screening device in that the screen moves from the one fixed member toward the other fixed member, wherein the screen is opened. The passage from inner space 11 of the glasshouse to space 12 is hereby closed off by the screen. A number of the elements between ridge 7 and gutter 4 can be embodied as ventilation windows. Insects can be prevented entry by arranging a screening device in which a fabric screen is used in the form of an insect screen.

Figure 1 further shows that supply rolls 13 provided with material strips can be placed during the erection of the glasshouse on site. Supply 13 comprises a quantity of strip-like material wound into a roll. The rollable material is preferably steel, in particular stainless steel, optionally pre-treated coated material. Particularly suitable is a zinc coating. A number of supplies 13 can be present on site. A roll 13 can comprise a strip of material of several hundreds of metres.

A rolling machine 14 is shown schematically. The rolling device can be taken to the site. The assembly of such a compact rolling device is known to the skilled person. The strip-like material 16 is guided via an inlet 15 from supply 13 into rolling device 14, and there rolled by means of known rollers, wherein different bends are arranged in strip-like material 16. The rolled material 17 leaves rolling device 14 via an outlet (not shown). The rolled material 17 can be made to a desired length, which is for instance equal to the overall width of glasshouse 1. Considerably longer lengths than have heretofore been usual can be applied in the greenhouse. Not only is it hereby possible to save on transport costs, but also on the drive members necessary to move the screening device as according to arrow 10. Because a smaller number of screen frames 17, for instance one, are applied for the screening device when compared to the prior art, fewer drive members need be arranged in the greenhouse, which additionally results in a reduction of the shading effect of the screening device.

Figure 2 shows a first embodiment of a screen frame 18. Screen frame 18 can for instance be the rolled profile 17 made with rolling device 14 by the rolling strip-like material 16 on site.

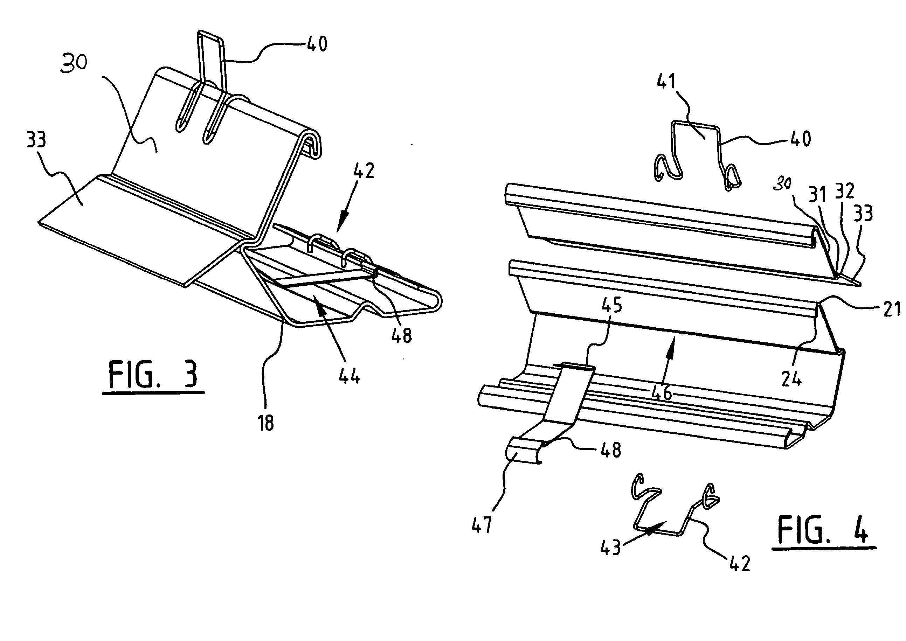

The cross-section of the profile of screen frame 18 has two folded edges 19,20. These are formed on the outer ends of the profile. Folded edges 19 and 20 are formed by forming bending points 21, 22 respectively by rolling with rolling device 14. Folded edges 19 and 20 are relatively thin strips relative to the whole profile of screen frame 18. Bending point 21 is arranged between folded edge 19 and side 23. Side 23 and folded edge 19 form a V-shaped figure. Side 23 is considerably longer/wider than folded edge 19. Side 23 is preferably twice, and in a further preferred embodiment more than three times as long as folded edge 19. Because a V-shaped figure is formed, outer end 24 of the profile is particularly suitable as point of engagement, for instance for a clamping means such as a coupling means for coupling screen frame 18 to a guide arranged in the glasshouse. This will be further described with reference to figures 3 and 4.

The screen frame has a substantially C-shaped cross-section. Various other bends are arranged in the screen frame. Reference numeral 25 designates a Z-shaped double bend. A bend with an obtuse angle 26 is further indicated. A V-shaped bend 27 is further arranged in longitudinal side 28 of screen frame 18. The longitudinal side 28 is connected to second folded edge 20 via bend 22. It will be apparent that the profile of figure 2 can be rolled on site from a strip-like material 16 from a supply 13 using a rolling device 14. In a preferred embodiment rolling device 14 can be further provided with coating means for applying a desired coating, or the coating can be applied beforehand on the roll of strip-like material 16 on supply 13.

Figures 3 and 4 show two views of the screen frame according to figure 2. Screen frame 18 is manufactured from a stainless steel or a coated steel. On screen frame 18 is arranged a flexible element 30, which is for instance formed by a rubber or other suitable material. Flexible element 30 is placed on screen frame 18 and preferably has the same length as screen frame 18, in particular a length which corresponds with the width of the greenhouse. Flexible element 30 can be formed by rolling a flexible strip and can likewise be formed on site. A supply of the flexible material 30 can be provided on site in similar manner as a supply of rollable material 13. The rolling of a rubber takes place partly through heating, and the rigidity of the flexible material can hereby be modified and/or changed locally. A flexible material with a shape memory is particularly used.

The flexible material lies against side 23 of screen frame 18. The flexible material is further arranged over bending point 21 and folded around the outer end 24 of the screen frame. The flexible element can hereby engage on the screen frame. In another embodiment no use is made of the engaging of flexible element round outer end 24. Bending points 31,32 of the flexible element ensure that a flap 33 protrudes on a front side of the screen frame, this protrusion forming a closing edge of the screen frame. When the screen is opened, screen frame 18 will be moved toward a fixed member 5 and will connect to this fixed member in that closing flap 33 comes to lie on this fixed member. The screening device will hereby divide the greenhouse into two compartments.

A coupling means 40 in the form of a wire spring is further arranged in this embodiment. Wire spring 40 is arranged on an upper outer end of the C-shaped profile of screen frame 18. Wire spring 40 is arranged such that flexible element 30 is clamped between wire spring 40 and screen frame 18. Wire spring 40 engages in particular around outer end 24 and lies against side 23 of screen frame 18. Wire spring 40 can be biased so that wire spring 40 exerts a clamping on flexible element 30 which is clamped onto screen frame 18.

Coupling means 40 further forms a part protruding from screen frame 18, with an opening 41 in which a guide of the screening device can be received. Screen frame 18 is hereby coupled to the guide.

Further arranged is a second wire spring 42 which forms a further coupling means for a screen frame 18 with a guide. A guide for guiding the screen frame can be accommodated in the same manner in space 43 of wire spring 42. Wire spring 42 is also arranged over a folded edge 20 of screen frame 18 and placed clampingly around the outer end. Wire spring 43 lies against side 28 of the screen frame. Wire spring 42 is biased so that coupling means 42 engages clampingly on screen frame 18.

A clamping means 44 is further shown. Clamping means 44 can also be releasably connected to screen frame 18. Clamping means 44 is a rolled profile. Clamping means 44 is for instance a steel or stainless steel rolled profile. Clamping means 44 is provided with a bend 45 which is arranged in the V-shaped receiving space 46 formed by bend 25. Bend 45 hereby supports on screen frame 18. Clamping means 44 is further formed such that it runs over folded edge 20 with a part 47, formed as an arm or also a folded edge, around the outer end of screen frame 18. The fold of clamping means 44 lies around folded edge 20. Clamping means 44 further supports with side 48 on the outer end of folded edge 20. Side 48 and bend 45 form the clamping points of clamping means 44. Clamping means 44 is suitable for fixedly clamping a fabric screen onto screen frame 18. A fabric screen is thus arranged on the inner side of screen frame 18 and arranged in the C-shaped inner space.

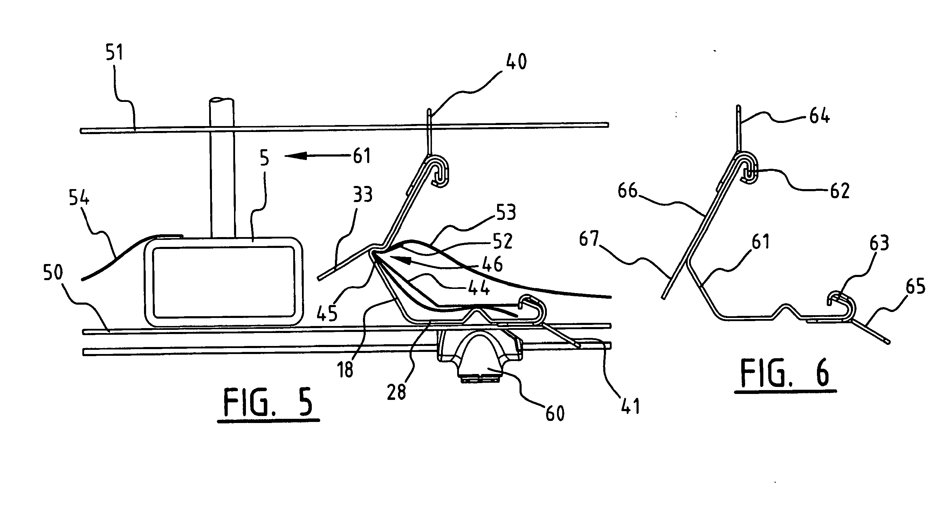

Figure 5 shows a cross-section of the most important components of the screening device. A view is shown of the screening device which is placed just below or between gutters 4 and between fixed members 5 in a glasshouse according to figure 1.

Two guides 50 and 51 are shown. The guides are arranged one above the other in glasshouse 1. Guides 50 and 51 protrude respectively through open spaces 41 and 43 of wire spring 40 and 42 of the embodiment according to figures 3 and 4. Screen frame 18 supports on guide 50. The top side of the screen frame is coupled to upper guide 51 via wire 44.

The screen frames shown in figures 2, 3 and 4 are shown in each case in the orientation according to the position of use, wherein the side 28 is the lowest component of the screen frame.

It can be seen that closing strip 33 of the screen frame protrudes on the front side of the screen frame from the outside of the screen frame and in the direction of a fixed member 5, the cross-section of which is shown. When the screen is opened, screen frame 18, optionally coupled to the drive member (not shown) via a slip coupling 60, will move toward fixed member 5 as according to arrow 61 and closing strip 33 will move against fixed member 5. A close-fitting connection between screen frame 18 and fixed member 5 is hereby obtained at diverse locations along the length of screen frame 18. Possible unevenness along the length of fixed members 5 and/or screen frame 18 can be allowed for here.

Figure 5 also shows clamping means 44 which is received in bending point 46 of screen frame 18. Clamping means 44 has a flange 52 over which fabric screen 53 is guided. Fabric screen 53 is guided over flange 52, carried between bending point 45 of clamping means 44 and screen frame 18 and then arranged clamped under clamping means 44 and side 28 of screen frame 18. In an embodiment shown in figure 5 fabric screen 53 is almost fully opened and will close off the space between fixed members 5.

A second fabric screen 54 connected to fixed member 5 is also shown in figure 5. Second fabric screen 54 is connected to a screen frame (not shown) which is likewise arranged in the almost-opened position, moving against a subsequent fixed member 5.

Figure 6 shows a second embodiment in which a screen frame 61 is shown in cross-section. Screen frame 61 has a C-shaped cross-section. A folded edge 62,63 is formed at each outer end of the cross-section. The folding points form points of engagement, for instance for a coupling means 64,65 formed by wire springs, but also for a flexible element 66 of a rubber which, by means of a strip 67, forms the closing strip which will close the gap between screen frame 61 and a fixed member in the opened situation of the screening device. The shown embodiment according to figure 6 is particularly easy to manufacture.

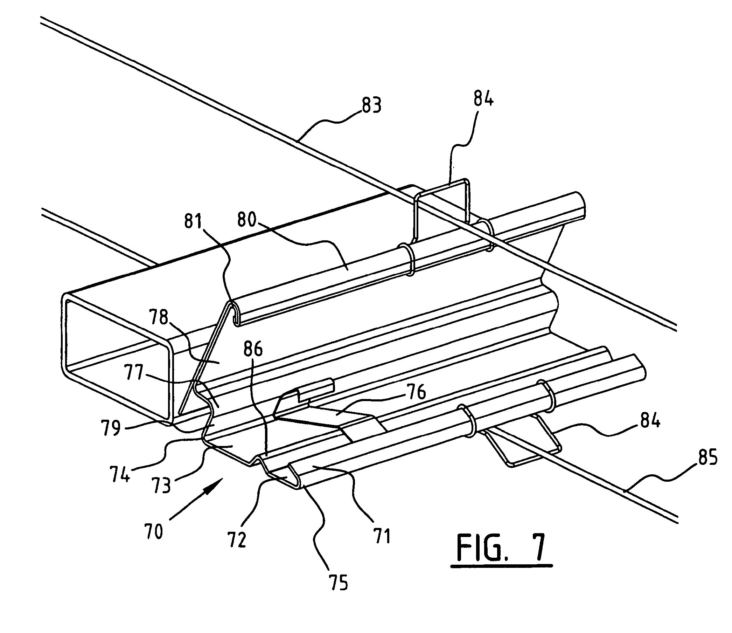

Figure 7 shows a further embodiment which is particularly recommended. The cross-section of screen frame profile 70 has two dovetail shapes. The shown profile is constructed from two mutually connecting dovetail shapes. Folded edge 71, side 72 and side 73 of the screen frame, formed and connected by substantially two bending points 74,75, substantially form a dovetail shape. Clamping means 76 for clamping the fabric screen onto screen frame 70 is arranged on the inner side of the dovetail shape. Such a clamping means can be readily arranged in bending points 74,75. Clamping means 76 is rolled accordingly.

A second dovetail shape is formed by folded edge 77, side 78 and side 79 of the screen frame. Side 79 is connected via a bending point to side 73. The second dovetail 77-79 forms the point of engagement for flexible element 80 which is arranged on the outer side of the substantially C-shaped profile of screen frame 70, and engages around this dovetail. Coupling means 84, which connects/couples the screen frame to guide 83, engages around bending point 81 and the outer end of folded edge 77. Coupling means 84 is arranged around folded edge 71 and couples the screen frame to guide 85.

A V-shaped bend 86 is arranged in the first dovetail shape 71,72,73. Bend 86 can be used as a support point for a slip coupling which couples to a drive member. The slip coupling can be arranged on the underside of the screen frame, in particular on the underside of side 72.

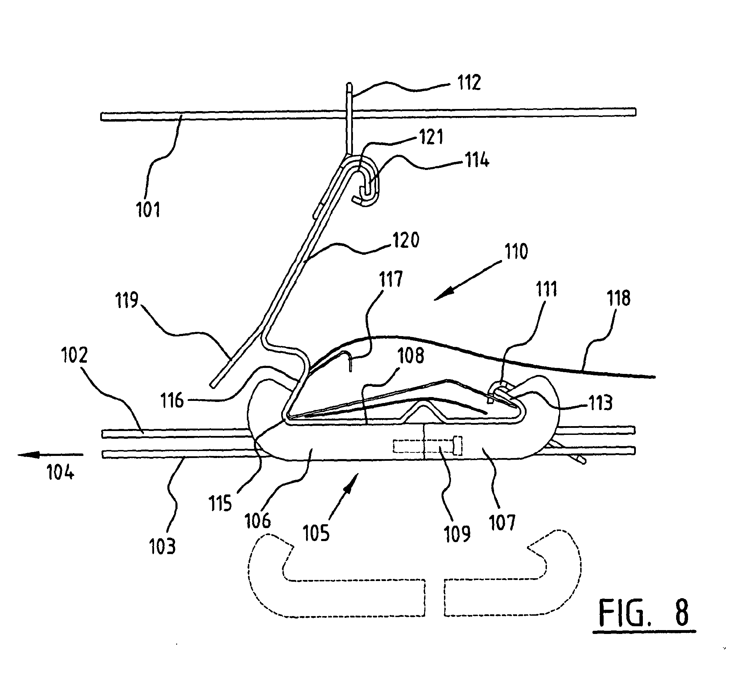

Figure 8 shows a screening device 100 arranged between two guides 101, 102. Also shown is a drive member 103, for instance a tube or a wire, which is connected to a drive means such as a pulley or other suitable means which can move the drive member as according to arrow 104. The drive member runs through slip coupling 105, which is only shown schematically here. The slip coupling couples the movement of the drive member on the screen frame, whereby this latter can move as according to arrow 104, whereby the screen coupled to the screen frame can be closed and opened.

In this embodiment the slip coupling has two body parts 106 and 107. Slip coupling 105 is shown in the mounted situation, the individual, unassembled body parts being shown with broken lines. The body parts are coupled by arranging a bolt 109. The slip coupling herein engages without further connecting means on the underside 108 of screen frame 110, which comprises a substantially dovetail-shaped profile. Due to the dovetail shape this part can be readily engaged and clamped by the slip coupling, in particular the slip coupling consisting of two body parts.

The profile of screen frame 110 is comparable to the previously shown profiles. Two wire springs 111 and 112 engage on the respective folded edges 113,114 formed on the longitudinal edges of the rolled, substantially C-shaped profile of the screen frame. The profile also has a number of rolled edges closer to the centre of the profile. Together with the edge 116 and the folded edge 113 formed thereon, bending point 115 forms a dovetail-shaped profile on which the slip coupling can engage.

Edge 116 is also point of engagement and clamping point for clamping means 117, which clamps screen 118 onto the screen frame.

Flexible element 119 forms the closing strip. Closing strip 119 lies against side 120 of the profile of the screen frame. Closing strip 119 is further formed such that it engages around bending point 121 of folded edge 114. The closing strip is formed by arranging two bending points in a strip of flexible material.

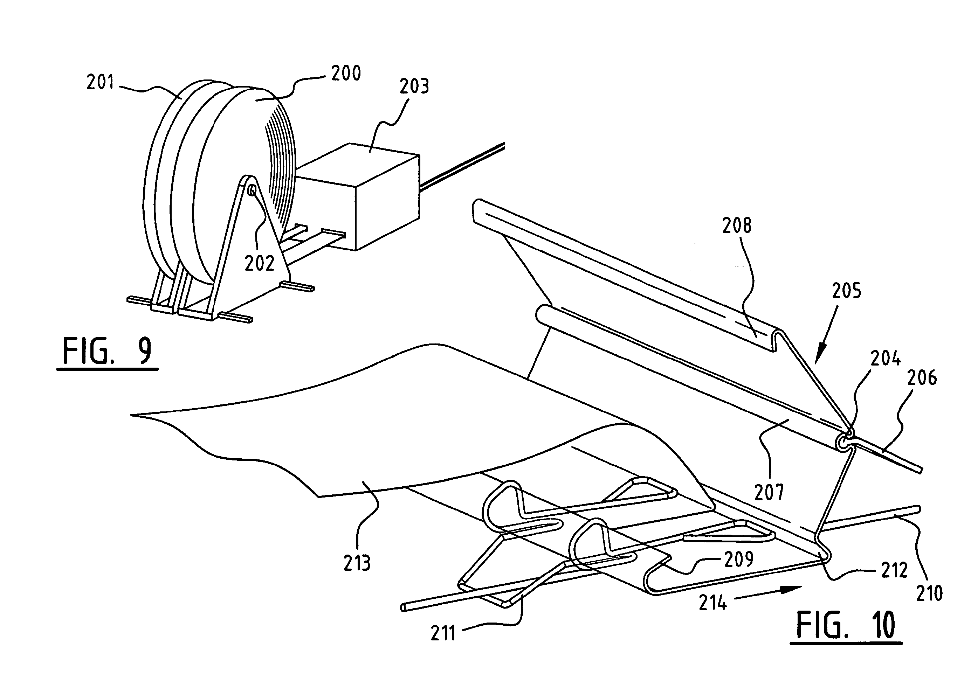

Figure 9 shows two rolls 200 and 201 which are placed on site. The site is for instance the location where a glasshouse is constructed. The rolls can be transported easily and can have several hundreds of metres of material on a roll. The material can be unwound from the roll by rotating the roll around shaft 202.

The shown roll 200 is a roll of a sheet material such as a steel, preferably stainless steel. The stainless steel can optionally be coated. In a preferred embodiment recesses can optionally be arranged in the rolled-up steel strip by punching. This pretreatment can be advantageous. A coating can be arranged after the pretreatment. The pretreated strip is hereby protected against for instance moisture.

Roll 201 is for instance a roll of a flexible material, for instance a rubber or a plastic. In a preferred embodiment the flexible material is provided on one side with a thickened portion, for instance a thickened portion 204 as shown in figure 10.

A rolling device 203, shown schematically here, is also present on site. The rolling device has an inlet and an outlet. The optionally pretreated strips of material from rolls 200 and 201 are guided into the inlet. These strips are formed by various rolling techniques into a screen frame according to the invention, in particular the screen frame according to figure 10. The formed screen frame consists of what was strip material 205 and a flexible material which forms closing strip 206. The closing strip has a thickened portion 204.

During rolling the thickened portion 204 is received in a receiving chamber 207 which is rolled into the sheet-like material during rolling. It is also possible to work without a thickened portion. The rolling around the thickened portion results in an intimate connection, wherein the opening or mouth of receiving chamber 207 is smaller than the thickened portion.

A connection is obtained between closing strip 206 and screen frame 205 by the on site rolling. The connection is releasable since the closing strip can slide out of the cavity. The connection is however preferably permanent.

The on site coupling has the further advantage that no extra coupling means or an additional step in the method is required to make the coupling. A rolled coupling is moreover very wear-resistant.

On site rolling of the closing strip into the screen frame is an invention which can be seen as separate from the other inventions stated in this application. The rolling-in and other additional features or measures can form part of a divisional application.

Screen frame 205 is formed in similar manner as in the previous embodiments. Folded edges 208 and 209 are formed on the outer ends. The screen frame is rolled and has a cross-section which is a substantially C-shaped cross-section, wherein the open side of the C forms the space into which the screen can be folded and wherein the upright, closed side of the C forms the front side of the screen frame, on which the closing strip is arranged and which in the closed position connects to a cross beam of the glasshouse.

Screen frame 205 is guided in the glasshouse partly by means of a guide wire 210. A plurality of guide wires can be present, including wires above the screen frame.

Guide wire 210 is engaged by wire spring 211. Wire spring 211 is shown partly in broken lines, since parts of the wire spring are situated behind folded edge 209.

Wire spring 211 can be clamped onto the outer end of C-shaped screen frame 205 over and around folded edge 209. Folded edge 209 forms an additional point of engagement, formed on the screen frame, for the wire spring. In addition, wire spring 211 is clamped in corner point 212. Corner point 212 and folded edge 209 form a dovetail shape in cross-section, as can be clearly seen in figure 10. The wire spring can be placed in the dovetail shape.

In the shown embodiment the wire spring is not clamped in the corner points of the dovetail shape. This is not necessary according to the invention.

In corner point 212 screen 213 is clamped between wire spring 211 and the inner angle of corner 212. When the screen frame is moved as according to arrow 214 via a coupling to a drive member, the screen is unfolded between screen frame and the cross-beam to which the screen is also coupled.

Diverse couplings, for instance with slip couplings, are possible between drive member and screen frame. A slip coupling can be arranged on the underside of the screen frame.

Wire spring 211 not only clamps the screen onto the screen frame but is also engaging means for guide wire 210. Together with a part of folded edge 209 wire spring 211 forms a loop through which guide 210 is carried. Wire spring 211 is formed such that it lies against both the inside and the outside of the screen frame. Wire spring 211 runs through below the screen frame (broken lines).

The invention is described on the basis of the preferred embodiments. Various other embodiments are possible within the scope of the claims. Protection is provided by the claims and possible equivalent forms of the invention will also fall within the scope of protection of the claims.

## Claims

1. Screening device for a glasshouse (1), comprising at least one screen frame (18), at least one fabric screen (53) connected to the screen frame, at least one guide (50,51) for guiding the screen frame between an opened position and a closing position, at least one coupling means (40) connected to the screen frame for coupling the screen frame to the guide, and a flexible element (30) such as a closing strip which is releasably connected to the screen frame and which protrudes from one side of the screen frame **characterised in that** the screen frame has a rolled profile, wherein the profile has a substantially C-shaped cross-section.

2. Screening device as claimed in claim 1, **characterized in that** the screen frame is at least provided with a folded edge formed on at least one of the longitudinal edges of the profile.

3. Screening device as claimed in claim 1, **characterized in that** the two longitudinal edges of the screen frame have a folded edge.

4. Screening device as claimed in claim 3, **characterized in that** in cross-section the profile of the screen frame has two folded edges and at least two bends.

5. Screening device as claimed in any of the claims 1-4, **characterized in that** the profile of the screen frame has in cross-section at least one double V-shaped bend, for instance a Z-shaped bend.

6. Screening device as claimed in any of the claims 1-5, **characterized in that** the profile has two Z-shaped bends.

7. Screening device as claimed in claim 6, **characterized in that** the profile has substantially two dovetail shapes in cross-section.

8. Screening device as claimed in any of the claims 1-7, **characterized in that** the coupling means clamps the flexible element onto the screen frame.

9. Screening device as claimed in any of the claims 1-8, **characterized in that** the flexible element lies against at least one side of the profile of the screen frame.

10. Screening device as claimed in claim 8 or 9, **characterized in that** the flexible element lies releasably against the folded edge of the screen frame and against at least one side of the profile adjacent to the folded edge.

11. Screening device as claimed in any of the claims 8-10, **characterized in that** in cross-section the profile is provided with at least two bends which form a dovetail, and that the flexible element engages on the dovetail.

12. Screening device as claimed in claim 11, **characterized in that** the flexible element engages on an outer side of the dovetail.

13. Screening device as claimed in any of the claims 2-12, **characterized in** the coupling means engages around the outer end of the folded edge.

14. Screening device as claimed in any of the claims 1-13, **characterized in that** the coupling means couples the screen frame to a guide extending above the fabric screens.

15. Screening device as claimed in any of the claims 1-14, **characterized in that** the screening device further comprises a clamping means which is clamped releasably onto the screen frame and which connects the fabric screen to the screen frame.

16. Screening device as claimed in claim 15, **characterized in that** the clamping means is clamped between an inner wall of the profile and the folded edge.

17. Screening device as claimed in claim 1, 15 or 16, **characterized in that** the coupling means and/or the clamping means is a wire spring.

18. Screening device as claimed in any of the foregoing claims, **characterized in that** the screen frame has at least one rolled edge situated close to the centre of the profile of the screen frame.

19. Screening device as claimed in any of the foregoing claims, **characterized in that** a longitudinal side of the flexible element is received in a receiving chamber rolled into the screen frame.

20. Screening device as claimed in claim 19, **characterized in that** the longitudinal side of the flexible element has a thickened portion which is received in the receiving chamber.

21. Screen frame (18) for a screening device for a glasshouse which has a rolled profile of substantially C-shaped cross-section, wherein the screen frame is at least provided with a folded edge (19,20) formed on at least one of the longitudinal edges of the profile.

22. Screen frame as claimed in claim 21, **characterized in that** the screen frame has at least one rolled edge situated close to the centre of the profile of the screen frame.

23. Screen frame as claimed in claim 21 or 22, **characterized in that** the screen frame is at least provided with a folded edge formed on at least one of the longitudinal edges of the profile.

24. Screen frame as claimed in claim 21 or 22, **characterized in that** the two longitudinal edges of the screen frame have a folded edge.

25. Screen frame as claimed in claim 24, **characterized in that** in cross-section the profile of the screen frame has two folded edges and at least two bends.

26. Screen frame as claimed in any of the claims 21-25, **characterized in that** in cross-section the profile of the screen frame has at least one double V-shaped bend, for instance a Z-shaped bend.

27. Screen frame as claimed in claim 26, **characterized in that** the profile has two Z-shaped bends.

28. Screen frame as claimed in claim 26 or 27, **characterized in that** in cross-section the screen frame has substantially a profile forming two dovetails.

29. Screen frame as claimed in any of the claims 21-28, **characterized in that** the screen frame has a receiving chamber for a closing strip.

30. Glasshouse (1) comprising a glasshouse frame of columns, fixed members and gutters, in which glasshouse at least one screening device is arranged between the fixed members (5), wherein the screening device comprises a screen frame (48), which screen frame is connected to an end of a fabric screen (53), which fabric screen is connected at the other end to the glasshouse frame, and wherein the screen frame is movable by means of a drive member between a closing position and an opened position for the fabric screens, **characterized in that** the screen frame has a rolled profile having a substantially C-shaped cross-section.

31. Glasshouse as claimed in claimed 30, **characterized in that** the screen frame has at least one rolled edge situated close to the centre of the profile of the screen frame.

32. Glasshouse as claimed in claimed 30 or 31, **characterized in that** the screen frame is at least provided with a folded edge formed on at least one of the longitudinal edges of the profile.

33. Glasshouse as claimed in claim 32, **characterized in that** the two longitudinal edges of the screen frame have a folded edge.

34. Glasshouse as claimed in claim 33, **characterized in that** in cross-section the profile of the screen frame has two folded edges and at least two bends.

35. Glasshouse as claimed in any of the claims 30-34, **characterized in that** in cross-section the profile of the screen frame has at least one double V-shaped bend, for instance a Z-shaped bend.

36. Glasshouse as claimed in claim 35, **characterized in that** the profile of the screen frame has two Z-shaped bends.

37. Glasshouse as claimed in claim 36, **characterized in that** in cross-section the profile of the screen frame has substantially two dovetail shapes.

38. Glasshouse as claimed in any of the claims 30-37, **characterized in that** the screen frame has a rolled receiving chamber for the flexible strip, such as a closing strip.

39. Method for manufacturing a screening device in a glasshouse, comprising of providing a guide in a roof of a glasshouse, providing a supply of rollable material on site, rolling the rollable material on site to form a screen frame having a profile of substantially C-shaped cross-section, placing the screen frame in the screening device and coupling the screen frame to the guide.

40. Method as claimed in claim 39, **characterized in that** the rolling comprises of forming at least one longitudinal edge close to the centre of the profile of the screen frame.

41. Method as claimed in claim 39 or 40, **characterized in that** the rolling comprises of forming at least one folded edge on one of the longitudinal edges of the material.

42. Method as claimed in claim 39 or 40 or 41, **characterized in that** the coupling comprises of arranging wire springs on the screen frame, preferably round the folded edge, and coupling the wire spring to a screen frame guide.

43. Method as claimed in claim 39 or 40, **characterized in that** the rolling comprises of forming two folded edges on the longitudinal edges of the profile.

44. Method as claimed in claim 43, **characterized in that** the rolling further comprises of bending the profile in cross-section at least at two locations.

45. Method as claimed in claim 44, **characterized in that** the rolling comprises of forming two Z-figures in the profile.

46. Method as claimed in claim 45, **characterized in that** the rolling comprises of forming at least one dovetail figure.

47. Method as claimed in any of the claims 39-44, **characterized in that** the rolling comprises of rolling a receiving chamber in the screen frame for a closing strip.

48. Method as claimed in claim 45, **characterized in that** on-site rolling comprises of co-rolling the closing strip and receiving a longitudinal side of the closing strip in the receiving chamber of the screen frame.

## Patentansprüche

1. Abschirmvorrichtung für ein Glashaus (1), umfassend zumindest einen Abschirmrahmen (18), zumindest eine Gewebeabschirmung (53), die am Abschirmrahmen befestigt ist, zumindest eine Führung (50, 51) zum Führen des Abschirmrahmens zwischen einer geöffneten und einer schließenden Position, zumindest ein Verbindungsmittel (40), das mit dem Abschirmrahmen zum Verbinden des Abschirmrahmens mit der Führung verbunden ist, und ein flexibles Element (30) wie einen Schließstreifen, der lösbar mit dem Abschirmrahmen verbunden ist, und der von einer Seite des Abschirmrahmens hervorsteht,
**dadurch gekennzeichnet, dass**
der Abschirmrahmen ein gewalztes Profil hat, wobei das Profil einen im Wesentlichen C-förmigen Querschnitt aufweist.

2. Abschirmvorrichtung gemäß Anspruch 1,
**dadurch gekennzeichnet, dass**
der Abschirmrahmen zumindest mit einer Falzkante ausgestattet ist, die auf zumindest einer der Profillängskanten ausgebildet ist.

3. Abschirmvorrichtung gemäß Anspruch 1,
**dadurch gekennzeichnet, dass**
die beiden Längskanten des Abschirmrahmens eine Falzkante aufweisen.

4. Abschirmvorrichtung gemäß Anspruch 3,
**dadurch gekennzeichnet, dass** das Profil des Abschirmrahmens im Querschnitt zwei Falzkanten und zumindest zwei Biegungen aufweist.

5. Abschirmvorrichtung gemäß einem der Ansprüche 1 - 4, **dadurch**
**gekennzeichnet, dass**
das Profil des Abschirmrahmens im Querschnitt zumindest eine Doppel-V-Biegung, zum Beispiel eine Z-förmige Biegung aufweist.

6. Abschirmvorrichtung gemäß einem der Ansprüche 1- 5, **dadurch gekennzeichnet, dass** das Profil zwei Z-förmige Biegungen aufweist.

7. Abschirmvorrichtung gemäß Anspruch 6,
**dadurch gekennzeichnet, dass**
das Profil im Wesentlichen zwei Schwalbenschwanzformen im Querschnitt aufweist.

8. Abschirmvorrichtung gemäß einem der Ansprüche 1 - 7,
**dadurch gekennzeichnet, dass**
das Verbindungsmittel das flexible Element am Abschirmrahmen anklammert.

9. Abschirmvorrichtung gemäß einem der Ansprüche 1 - 8,
**dadurch gekennzeichnet, dass**
das flexible Element an mindestens einer Seite des Profil des Abschirmrahmens anliegt.

10. Abschirmvorrichtung gemäß Anspruch 8 oder 9,
**dadurch gekennzeichnet, dass**
das flexible Element lösbar an der Falzkante des Abschirmrahmens und an mindestens einer Seite des Profils neben der Falzkante anliegt.

11. Abschirmvorrichtung gemäß einem der Ansprüche 8 - 10,
**dadurch gekennzeichnet, dass**
das Profil im Querschnitt mit zumindest zwei Biegungen ausgebildet ist, die einen Schwalbenschwanz bilden, und **dadurch**, dass das flexible Element im Schwalbenschwanz eingreift.

12. Abschirmvorrichtung gemäß Anspruch 11,
**dadurch gekennzeichnet, dass**
das flexible Element an einer Außenseite des Schwalbenschwanzes eingreift.

13. Abschirmvorrichtung gemäß einem der Ansprüche 2-12,
**dadurch gekennzeichnet, dass**
das Verbindungsmittel um das äußere Ende der Falzkante eingreift.

14. Abschirmvorrichtung gemäß einem der Ansprüche 1 -13,
**dadurch gekennzeichnet, dass**
das Verbindungsmittel den Abschirmrahmen mit einer Führung verbindet, die oberhalb der Gewebeabschirmungen verläuft.

15. Abschirmvorrichtung gemäß einem der Ansprüche 1-14,
**dadurch gekennzeichnet, dass**
die Abschirmvorrichtung weiterhin ein Klammermittel umfasst, das lösbar an dem Abschirmrahmen angeklammert ist und das die Gewebeabschirmung mit dem Abschirmrahmen verbindet.

16. Abschirmvorrichtung gemäß Anspruch 15,
**dadurch gekennzeichnet, dass** das Klammermittel zwischen einer Innenwand des Profils und der Falzkante eingeklammert ist.

17. Abschirmvorrichtung gemäß Anspruch 1,15 oder 16,
**dadurch gekennzeichnet, dass**
das Verbindungsmittel und/oder Klammermittel eine Drahtfeder ist.

18. Abschirmvorrichtung gemäß einem der vorhergehenden Ansprüche,
**dadurch gekennzeichnet, dass**
der Abschirmrahmen zumindest eine gewalzte Kante hat, die sich nahe der Mitte des Abschirmrahmenprofils befindet.

19. Abschirmkante gemäß einem der vorhergehenden Ansprüche,
**dadurch gekennzeichnet, dass**
eine Längsseite des flexiblen Elements in einer Aufnahmekammer aufgenommen wird, die in den Abschirmrahmen gewalzt wird.

20. Abschirmvorrichtung gemäß Anspruch 19,
**dadurch gekennzeichnet, dass**
die Längsseite des flexiblen Elements einen verdickten Abschnitt hat, der in einer Aufnahmekammer aufgenommen wird.

21. Abschirmrahmen (18) für eine Abschirmvorrichtung für ein Glashaus, der ein gewalztes Profil mit einem im Wesentlichen C-förmigen Querschnitts hat, wobei der Abschirmrahmen zumindest mit einer Falzkante (19, 20) ausgebildet ist, die auf zumindest einer der Profillängskanten ausgebildet ist.

22. Abschirmrahmen gemäß Anspruch 21,
**dadurch gekennzeichnet, dass**
der Abschirmrahmen zumindest eine gewalzte Kante hat, die sich nahe der Mitte des Abschirmrahmenprofils befindet.

23. Abschirmrahmen gemäß Anspruch 21 oder 22,
**dadurch gekennzeichnet, dass**
der Abschirmrahmen zumindest mit einer Falzkante ausgestattet ist, die auf zumindest einer der Profillängskanten ausgebildet ist.

24. Abschirmrahmen gemäß Anspruch 21 oder 22,
**dadurch gekennzeichnet, dass**
die beiden Längskanten des Abschirmrahmens eine Falzkante aufweisen.

25. Abschirmrahmen gemäß Anspruch 24,
**dadurch gekennzeichnet, dass**
das Profil des Abschirmrahmens im Querschnitt zwei Falzkanten und zumindest zwei Biegungen aufweist.

26. Abschirmrahmen gemäß einem der Ansprüche 21-25, **dadurch**
**gekennzeichnet, dass**
das Profil des Abschirmrahmens im Querschnitt zumindest eine Doppel-V-Biegung, zum Beispiel eine Z-förmige Biegung, aufweist.

27. Abschirmvorrichtung gemäß Anspruch 26,
**dadurch gekennzeichnet, dass**
das Profil zwei Z-förmige Biegungen aufweist.

28. Abschirmrahmen gemäß Anspruch 26 oder 27,
**dadurch gekennzeichnet, dass**
der Abschirmrahmen im Querschnitt im Wesentlichen ein Profil aufweist, das zwei Schwalbenschwänze bildet.

29. Abschirmrahmen gemäß einem der Ansprüche 21-28,
**dadurch gekennzeichnet, dass**
der Abschirmrahmen eine Aufnahmekammer für einen Schließstreifen hat.

30. Glashaus (1), umfassend einen Glashausrahmen aus Säulen, festen Elementen und Stegen, wobei zumindest eine Abschirmvorrichtung in dem Glashaus zwischen den festen Elementen (5) angeordnet ist, wobei die Abschirmvorrichtung einen Absehirmrahmen (18) umfasst, wobei der Abschirmrahmen mit einem Ende einer Gewebeabschirmung (53) verbunden ist, wobei eine Gewebeabschirmung am anderen Ende mit dem Glashausrahmen verbunden ist, und wobei ein Abschirmrahmen durch ein Antriebselement zwischen einer geschlossenen Position und einer offenen Position für die Gewebeabschirmungen bewegbar ist, **dadurch gekennzeichnet, dass** der Abschirmrahmen ein gewalztes Profil mit einem im Wesentlichen C-förmigen Querschnitt aufweist.

31. Glashaus gemäß Anspruch 30,
**dadurch gekennzeichnet, dass**
der Abschirmrahmen zumindest eine gewalzte Kante hat, die sich nahe der Mitte des Profils der Profillängskanten befindet.

32. Glashaus gemäß Anspruch 30 oder 31,
**dadurch gekennzeichnet, dass**
der Abschirmrahmen zumindest mit einer Falzkante ausgestattet ist, die auf zumindest einer der Profillängskanten ausgebildet ist.

33. Glashaus gemäß Anspruch 32,
**dadurch gekennzeichnet, dass**
die beiden Längskanten des Abschirmrahmens eine Falzkante aufweisen.

34. Glashaus gemäß Anspruch 33,
**dadurch gekennzeichnet, dass** das Profil des Abschirmrahmens im Querschnitt zwei Falzkanten und zumindest zwei Biegungen aufweist.

35. Glashaus gemäß einem der Ansprüche 30-34, **dadurch gekennzeichnet, dass** das Profil des Abschirmrahmens im Querschnitt zumindest eine Doppel-V-Biegung, zum Beispiel eine Z-förmige Biegung, aufweist.

36. Glashaus gemäß Anspruch 35,
**dadurch gekennzeichnet, dass**
das Profil des Abschirmrahmens zwei Z-förmige Biegungen aufweist.

37. Glashaus gemäß Anspruch 36,
**dadurch gekennzeichnet, dass**
das Profil des Abschirmrahmens im Querschnitt im Wesentlichen zwei Schwalbenschwanzformen aufweist.

38. Glashaus gemäß einem der Ansprüche 30 - 37,
**dadurch gekennzeichnet, dass**
der Abschirmrahmen eine gewalzte Aufnahmekammer für den flexiblen Streifen, wie einen Schließstreifen, hat.

39. Verfahren zum Herstellen einer Abschirmvorrichtung in einem Glashaus, umfassend die Bereitstellung einer Führung in einem Glashausdach, die Bereitstellung eines Vorrats an walzbarem Material vor Ort, Walzen des walzbaren Materials vor Ort zum Ausbilden eines Abschirmrahmens mit einem Profil mit einem im Wesentlichen C-förmigen Querschnitt, Anordnen des Abschirmrahmens in der Abschirmvorrichtung und Verbinden des Abschirmrahmens mit der Führung.

40. Verfahren gemäß Anspruch 39, **dadurch gekennzeichnet, dass** das Walzen das Ausbilden zumindest einer Längskante nahe der Mitte des Abschirmrahmenprofils beinhaltet.

41. Verfahren gemäß Anspruch 39 oder 40,
**dadurch gekennzeichnet, dass** das Walzen das Ausbilden von zumindest einer Falzkante auf einer der Längskanten des Materials umfasst.

42. Verfahren gemäß Anspruch 39 oder 40 oder 41,
**dadurch gekennzeichnet, dass**
die Verbindung die Anordnung von Drahtfedern auf dem Abschirmrahmen umfasst, vorzugsweise um die Falzkante, sowie das Verbinden der Drahtfeder mit einer Abschinnrahmenführung.

43. Verfahren gemäß Anspruch 39 oder 40,
**dadurch gekennzeichnet, dass** das Walzen das Ausbilden von zwei Falzkanten auf den Längskanten des Drahts umfasst.

44. Verfahren gemäß Anspruch 43, **dadurch gekennzeichnet, dass**
das Walzen weiterhin das Biegen des Profils im Querschnitt an mindestens zwei Positionen umfasst.

45. Verfahren gemäß Anspruch 44, **dadurch gekennzeichnet, dass**
das Walzen das Ausbilden von zwei Z-Figuren im Profil umfasst.

46. Verfahren gemäß Anspruch 45, **dadurch gekennzeichnet, dass**
das Walzen das Ausbilden von mindestens einer Schwalbenschwanzfigur umfasst.

47. Verfahren gemäß einem der Ansprüche 39 - 44,
**dadurch gekennzeichnet, dass**
das Walzen das Walzen einer Aufnahmekammer im Abschirmrahmen für einen Schließstreifen umfasst.

48. Verfahren gemäß Anspruch 45,
**dadurch gekennzeichnet, dass**
das Walzen vor Ort das Mitwalzen des Schließstreifens und das Aufnehmen der Längsseite des Schließstreifens in der Aufnahmekammer eines Abschirmrahmens umfasst.

## Revendications

1. Dispositif d'écrantage, pour une serre (1), comprenant au moins un cadre d'écran (18), au moins un écran (53) en tissu, relié au cadre d'écran, au moins un guide (50, 51) pour guider le cadre d'écran, entre une position ouverte et une position fermée, au moins un moyen de couplage (40), connecté au cadre d'écran, pour coupler le cadre d'écran au guide, et un élément flexible (30), tel qu'une bande de fermeture, relié de façon désolidarisable au cadre d'écran et faisant saillie d'un côté du cadre d'écran, **caractérisé en ce que** le cadre d'écran présente un profilé roulé, dans lequel le profilé présente une section transversale sensiblement en forme de C.

2. Dispositif d'écrantage selon la revendication 1, **caractérisé en ce que** le cadre d'écran est au moins muni d'un bord plié, formé sur au moins l'un des bords longitudinaux du profilé.

3. Dispositif d'écrantage selon la revendication 1, **caractérisé en ce que** les deux bords longitudinaux du cadre d'écran ont un bord plié.

4. Dispositif d'écrantage selon la revendication 3, **caractérisé en ce que**, observé en vue en coupe, le profilé du cadre d'écran présente deux bords pliés et au moins deux coudes.

5. Dispositif d'écrantage selon l'une quelconque des revendications 1 à 4, **caractérisé en ce que**, observé en vue en coupe, le profilé du cadre d'écran présente au moins un coude en forme de double V, par exemple un coude à forme en Z.

6. Dispositif d'écrantage selon l'une quelconque des revendications 1 à 5, **caractérisé en ce que** profilé présente deux coudes à forme en Z.

7. Dispositif d'écrantage selon la revendication 6, **caractérisé en ce que** le profilé présente essentiellement deux formes de section transversale en queue d'aronde.

8. Dispositif d'écrantage selon l'une des revendications 1 à 7, **caractérisé en ce que** les moyens de couplage serrent l'élément flexible sur le cadre d'écran.

9. Dispositif d'écrantage selon l'une quelconque des revendications 1 à 8, **caractérisé en ce que** l'élément flexible est situé contre au moins une face du profil du cadre d'écran.

10. Dispositif d'écrantage selon la revendication 8 ou 9, **caractérisé en ce que** l'élément flexible est disposé, de façon désolidarisable, contre le bord plié du cadre d'écran et contre au moins une face du profil adjacent au bord plié.

11. Dispositif d'écrantage selon l'une quelconque des revendications 8 à 10, **caractérisé en ce que**, observé en coupe transversale, le profilé est muni d'au moins deux coudes formant une queue d'aronde, et **en ce que** l'élément flexible vient en prise sur la queue d'aronde.

12. Dispositif d'écrantage selon la revendication 11, **caractérisé en ce que** l'élément flexible vient en prise sur une face extérieure de la queue d'aronde.

13. Dispositif d'écrantage selon l'une quelconque des revendications 2 à 12, **caractérisé en ce que** les moyens de couplage viennent en prise autour de l'extrémité extérieure du bord plié.

14. Dispositif d'écrantage selon l'une quelconque des revendications 1 à 13, **caractérisé en ce que** les moyens de couplage accouplent le cadre d'écran à un guide s'étendant au-dessus des écrans en tissu.

15. Dispositif d'écrantage selon l'une quelconque des revendications 1 à 14, **caractérisé en ce que** le dispositif d'écrantage comprend en outre des moyens de serrage, serrés de façon libérable sur le cadre d'écran et reliant le tissu d'écran au cadre d'écran.

16. Dispositif d'écrantage selon la revendication 15, **caractérisé en ce que** les moyens de serrage sont serrés entre une paroi intérieure du profilé et le bord plié.

17. Dispositif d'écrantage selon la revendication 1, 15 ou 16, **caractérisé en ce que** les moyens de couplage et/ou les moyens de serrage sont formés d'un ressort en fil.

18. Dispositif d'écrantage selon l'une quelconque des revendications précédentes, **caractérisé en ce que** le cadre d'écran présente au moins un bord roulé, situé près du centre du profilé du cadre d'écran.

19. Dispositif d'écrantage selon l'une quelconque des revendications précédentes, **caractérisé en ce qu'**un côté longitudinal de l'élément flexible est logé dans une chambre de logement, roulée dans le cadre d'écran.

20. Dispositif d'écrantage selon la revendication 19, **caractérisé en ce que** le côté longitudinal de l'élément flexible présente une partie épaissie, logée dans la chambre de logement.

21. Cadre d'écran (18), pour un dispositif d'écrantage pour une serre comprenant un profilé venant de laminage et ayant une section transversale sensiblement en forme de C, dans lequel le cadre d'écran présente au moins un bord plié (19, 20), formé sur au moins l'un des bords longitudinaux du profilé.

22. Cadre d'écran selon la revendication 21, **caractérisé en ce que** le cadre d'écran comprend au moins un bord roulé, situé près du centre de profilé du cadre d'écran.

23. Cadre d'écran selon la revendication 21 ou 22, **caractérisé en ce que** le cadre d'écran est au moins muni d'un bord plié, formé sur au moins l'un des bords longitudinaux du profilé.

24. Cadre d'écran selon la revendication 21 ou 22, **caractérisé en ce que** les deux bords longitudinaux du cadre d'écran ont un bord plié.

25. Cadre d'écran selon la revendication 24, **caractérisé en ce que**, observé en section transversale, le profil du cadre d'écran présente deux bords pliés et au moins deux coudes.

26. Cadre d'écran selon l'une quelconque des revendications 21 à 25, **caractérisé en ce que**, observé en vue en coupe, le profilé du cadre d'écran présente au moins un coude en forme de double V, par exemple un coude à forme en Z.

27. Cadre d'écran selon la revendication 26, **caractérisé en ce que** le cadre d'écran présente deux coudes à forme en Z.

28. Cadre d'écran selon la revendication 26 ou 27, **caractérisé en ce que**, observé en vue en coupe, le cadre d'écran présente essentiellement deux formes de section transversale en queue d'aronde.

29. Cadre d'écran selon l'une quelconque des revendications 21 à 28, **caractérisé en ce que** le cadre d'écran comprend une chambre de logement, pour une bande de fermeture.

30. Serre (1), comprenant un cadre de serre formé de colonnes, d'organes fixes et de gouttières, serre dans laquelle au moins un dispositif d'écrantage est agencé entre les organes fixes (5), dans laquelle le dispositif d'écrantage comprend au moins un cadre d'écran (18), ledit cadre d'écran étant connecté à une extrémité d'un écran (53) en tissu, ledit écran en tissu étant relié, à l'autre extrémité, au cadre de serre, et dans laquelle le cadre d'écran est déplaçable, au moyen d'un organe d'entraînement, entre une position fermée et une position ouverte pour les écrans en tissu, **caractérisé en ce que** le cadre d'écran présente un profilé roulé, ayant une section transversale sensiblement en forme de C.

31. Serre selon la revendication 30, **caractérisée en ce que** le cadre d'écran présente au moins un bord roulé, situé près du centre du profilé du cadre d'écran.

32. Serre selon la revendication 30 ou 31, **caractérisée en ce que** le cadre d'écran présente au moins un bord plié, formé sur au moins l'un des bords longitudinaux du profilé.

33. Serre selon la revendication 32, **caractérisée en ce que** les deux bords longitudinaux du cadre d'écran ont un bord plié.

34. Serre selon la revendication 33, **caractérisée en ce que**, observé en section transversale, le profil du cadre d'écran présente deux bords pliés et au moins deux coudes.

35. Serre selon l'une quelconque des revendications 30 à 34, **caractérisé en ce que**, observé en vue en coupe, le profilé du cadre d'écran présente au moins un coude en forme de double V, par exemple un coude à forme en Z.

36. Serre selon la revendication 35, **caractérisée en ce que** le profilé du cadre d'écran présente deux coudes à forme en Z.

37. Serre selon la revendication 36, **caractérisée en ce que** que, observé en vue en coupe, le profilé du cadre d'écran présente essentiellement deux formes de section transversale en queue d'aronde.

38. Serre selon l'une quelconque des revendications 30 à 37, **caractérisée en ce que** le cadre d'écran comprend une chambre de logement roulée, pour une bande flexible, telle qu'une bande de fermeture.

39. Procédé de fabrication d'un dispositif d'écrantage dans une serre, comprenant la fourniture d'un guide dans un toit d'une serre, la fourniture d'une alimentation sur site en matériau pouvant être roulé, le roulage sur site du matériau pouvant être roulé, pour former un cadre d'écran ayant un profil à section transversale sensiblement en forme de C, le placement du cadre d'écran dans le dispositif d'écrantage et le couplage du cadre d'écran au guide.

40. Procédé tel que revendiqué selon la revendication 39, **caractérisé en ce que** le roulage comprend la formation d'au moins un bord longitudinal près du centre du profilé du cadre d'écran.

41. Procédé tel que revendiqué selon la revendication 39 ou 40, **caractérisé en ce que** le roulage comprend la formation d'au moins un bord plié sur l'un des bords longitudinaux du matériau.

42. Procédé tel que revendiqué selon la revendication 39, ou 40, ou 41, **caractérisé en ce que** le couplage comprend l'agencement de ressorts en fil sur le cadre d'écran, de préférence autour du bord plié, et le couplage du ressort en fil à un guide de cadre d'écran.

43. Procédé tel que revendiqué selon la revendication 39 ou 40, **caractérisé en ce que** le roulage comprend la formation de deux bords pliés sur les bords longitudinaux du profilé.

44. Procédé tel que revendiqué selon la revendication 43, **caractérisé en ce que** le roulage comprend en outre le coudage du profilé en section transversale, en au moins deux emplacements.

45. Procédé tel que revendiqué selon la revendication 44, **caractérisé en ce que** le roulage comprend la formation de deux formes en Z dans le profilé.

46. Procédé tel que revendiqué selon la revendication 45, **caractérisé en ce que** le roulage comprend la formation d'au moins une forme en queue d'aronde.

47. Procédé tel que revendiqué selon l'une quelconque des revendications 39 à 44, **caractérisé en ce que** le roulage comprend la formation par roulage d'au moins une chambre de logement dans le cadre d'écran, pour une bande de fermeture.

48. Procédé tel que revendiqué selon la revendication 45, **caractérisé en ce que** le roulage sur site comprend le co-roulage de la bande de fermeture et le logement d'une face longitudinale de la bande de fermeture dans la chambre de logement du cadre d'écran.
